# EUROPÄISCHE PATENTANMELDUNG

(11) **EP 1 359 312 A2**
(43) Veröffentlichungstag der Anmeldung: **05.11.2003**
(21) Anmeldenummer: 03009098.9
(22) Anmeldetag: 19.04.2003
(51) Int. Cl.: F02M 31/16

(54) **Kraftfahrzeug mit einer Antriebseinrichtung und mit einem Betriebsmittelspeicher**

(30) Priorität: 02.05.2002 DE 10219429
(71) Anmelder: AUDI AG, 85045 Ingolstadt (DE)
(72) Erfinder: Almkermann, Jens Arik, 38547 Calberlah (DE)

(57) **Zusammenfassung**

Das Kraftfahrzeug enthält eine mindestens eine Abwärmefunktionseinheit (16) aufweisende Antriebseinrichtung (10) und einen Betriebsmittelspeicher (14).

Hierbei ist vorgesehen, dass der Betriebsmittelspeicher (14) zur Betriebsmittelerwärmung mit der Abwärmefunktionseinheit (16) wenigstens zeitweise wirkverbunden ist.

## Beschreibung

Die Erfindung betrifft ein Kraftfahrzeug mit einer mindestens eine Abwärmefunktionseinheit aufweisenden Antriebseinrichtung und mit einem Betriebsmittelspeicher, gemäß Oberbegriff des Anspruchs 1.

Kraftfahrzeuge der eingangs genannten Art sind bekannt. Zum korrekten Betreiben der Antriebseinrichtung, beispielsweise in Form eines Verbrennungsmotorsystems und/oder eines Brennstoffzellensystems, muss der Betriebsmittelspeicher beziehungsweise das Betriebsmittel erwärmt werden, um selbiges (beispielsweise Kohlenwasserstoff oder Wasserstoff) zum Antrieb beziehungsweise zum Betreiben des Kraftfahrzeugs nutzen zu können. Bisher erfolgte die Betriebsmittelerwärmung in einem gattungsgemäßen Kraftfahrzeug auf verhältnismäßig aufwendige Weise.

Es ist Aufgabe der Erfindung, ein Kraftfahrzeug der eingangs genannten Art vorzuschlagen, bei welchem eine hinreichende und relativ einfache Betriebsmittelerwärmung möglich ist.

Die Aufgabe wird gelöst durch ein Kraftfahrzeug mit den Merkmalen des Anspruchs 1. Erfindungsgemäß ist das Kraftfahrzeug dadurch gekennzeichnet, dass der Betriebsmittelspeicher zur Betriebsmittelerwärmung mit der Abwärmefunktionseinheit wenigstens zeitweise wirkverbunden ist. Mittels Nutzung bereits im Kraftfahrzeug vorliegender Abwärme zur Betriebsmittelerwärmung kann unter verhältnismäßig geringem Aufwand der Betriebsmittelspeicher auf eine erwünschte Betriebstemperatur erwärmt werden. Hierdurch ist es gegebenenfalls möglich, den Einsatz weiterer, speziell zur Betriebsmittelerwärmung im Kraftfahrzeug vorzusehender Erwärmungseinheiten wenigstens zu reduzieren oder gar vollständig auf einen solchen verhältnismäßig aufwendigen Einsatz zu verzichten.

Mit Vorteil ist die Abwärmefunktionseinheit ein Abgasführungssystem. Zusätzlich oder alternativ kann die Abwärmefunktionseinheit ein Kühlkreislaufsystem sein. Da bereits Betriebsmittelspeicher-Temperaturen unter 100°C zum korrekten Betreiben desselben Betriebsmittelspeichers gegebenenfalls ausreichen können, sind in einem Kraftfahrzeug zum Einsatz kommende, gegebenenfalls unterschiedliche Abwärmefunktionseinheiten als entsprechende Wärmequelle diesbezüglich nutzbar.

Entsprechend einer möglichen Ausführungsform kann die Abwärmefunktionseinheit Teil eines Verbrennungsmotorsystems und/oder Teil eines Brennstoffzellensystems sein. Dementsprechend kann der Betriebsmittelspeicher zur Betriebsmittelbeaufschlagung mit einem Verbrennungsmotor und/oder mit einer Brennstoffzelleneinheit verbunden sein. Ferner kann das Betriebsmittel ein Kraftstoff, insbesondere Kohlenwasserstoff (biogener Kraftstoff), oder Wasserstoff sein. Dies erlaubt, Kraftstoff und/oder Wasserstoff nach deren betriebsgünstigen Erwärmung auf eine insbesondere vorgebbare Betriebstemperatur in den Verbrennungsmotor und/oder entsprechend vorgewärmten Wasserstoff in die Brennstoffzelleneinheit zuzuführen.

Gemäß einer bevorzugten Ausführungsform ist der Betriebsmittelspeicher als Druckspeicher oder als Kryo-Speicher oder als Metallhydridspeicher ausgebildet. Bei diesen Betriebsmittelspeichertypen sind lediglich geringe Mengen an Wasserstoff im Kraftfahrzeug zu speichern. Der Wasserstoff dient dabei als Betriebsmittel zum Betreiben der Brennstoffzelleneinheit. Metallhydridspeicher sind aufgrund ihrer verhältnismäßig geringen Leistungsdichte derzeit in einem Kraftfahrzeug lediglich für relativ geringe Speicherinhalte an Betriebsmittel (Wasserstoff) geeignet. Sie werden unter Druck mit gasförmigem Wasserstoff betankt, müssen aber erwärmt werden, um Wasserstoff-Moleküle aus der atomaren Struktur des Metallgitters wieder herauslösen zu können. Auch Kryo-Speicher benötigen eine externe Zufuhr von thermischer Energie zur kontrollierten Abgabe des gespeicherten Wasserstoffs. Kryo-Speicher enthalten Flüssigwasserstoff, der vorzugsweise unmittelbar nach seiner Entnahme aus dem Speicher verdampft wird, so dass er anschließend auf verhältnismäßig einfache Weise ohne Phasenwechsel beispielsweise einem Verbrennungsmotor zugeführt werden kann.

Vorzugsweise ist der Betriebsmittelspeicher unter Zwischenschaltung mindestens eines Wärmetauschers mit der Abwärmefunktionseinheit verbunden. Mittels mindestens eines Wärmetauschers kann auf wirkungsgradgünstige und gegebenenfalls flexible Weise eine hinreichende Betriebsmittelerwärmung erfolgen.

Mit Vorteil ist der Betriebsmittelspeicher zusätzlich mit einem Latentwärmespeicher als Wärmequelle wenigstens zeitweise wirkverbunden. Der Latentwärmespeicher kann beispielsweise bei einem Kaltstart eines Verbrennungsmotors und/oder einer Brennstoffzelleneinheit des Kraftfahrzeugs nicht hinreichend vorliegende Abwärme zu einer Betriebsmittelerwärmung effektiv nutzen, so dass eine Kaltstartphase effektiv überbrückt werden muss, in dem wenigstens während eines Kaltstarts des Verbrennungsmotors und/oder der Brennstoffzelleneinheit wenigstens bis zu dem Zeitpunkt, ab welchem die Abwärmefunktionseinheit hinreichend Abwärme zur Betriebsmittelerwärmung liefert, mittels des Latentwärmespeichers eine schnelle und zuverlässige Betriebsmittelerwärmung erfolgt. Mittels der unmittelbar bei Bedarf übertragbaren Latentwärme wird somit die Bereitstellungszeit des Betriebsmittels für den Verbrennungsmotor und/oder für die Brennstoffzelleneinheit bei Kaltstart erheblich reduziert.

Vorzugsweise ist der Latentwärmespeicher in einem Betriebsmittelkreislauf des Betriebsmittelspeichers integriert. Dies erlaubt eine kompakte Ausgestaltung des Verbrennungsmotorsystems und/oder des Brennstoffzellensystems sowie eine wirkungsgradgünstige Wärmeübertragung von Latentwärme auf den Betriebsmittelspeicher insbesondere dann, wenn das Abgasführungssystem (Abgasstrang) und/oder das Kühlkreislaufsystem des Kraftfahrzeugs bei einem Kaltstart eine merkliche Aufheizzeit benötigen, um eine hinreichende Betriebsmittelerwärmung gewährleisten zu können.

Vorteilhafterweise ist die Brennstoffzelleneinheit als Hilfsenergie-Bereitstellungseinheit ausgebildet. Der Einsatz einer derartigen Brennstoffzelleneinheit bietet sich insbesondere zur Deckung des ständig steigenden Bedarfs an elektrischer Leistung im Kraftfahrzeug an. Dabei ist eine Stromerzeugung mittels der Brennstoffzelleneinheit weitaus wirkungsgradgünstiger als mittels einer vom Verbrennungsmotor angetriebenen Lichtmaschine. Der Einsatz einer Hilfsenergie-Bereitstellungseinheit in Form einer Brennstoffzelleneinheit ist insbesondere in Oberklassefahrzeugen, die eine Vielzahl von Stromverbrauchern an Bord haben, effektiv.

Die Brennstoffzellen können als Membran- oder als Festoxidbrennstoffzellen ausgebildet sein. Derartige Brennstoffzellen sind an sich bekannt und werden zur Erzeugung von elektrischem Strom mit Wasserstoff betrieben. Membranbrennstoffzellen werden auch als PEM-Brennstoffzellen und Festoxidbrennstoffzellen auch als SOFC-Brennstoffzellen bezeichnet.

Vorteilhafterweise ist eine Regeleinheit vorgesehen zur Regelung der Wärmeeinbringung in einen Betriebsmittelkreislauf des Betriebsmittelspeichers in Abhängigkeit der jeweils geforderten elektrischen Brennstoffzellenlast. Dies ermöglicht die Gewährleistung einer hinreichenden und schnellen Versorgung der Brennstoffzelleneinheit beziehungsweise der Brennstoffzellen mit Betriebsmittel (insbesondere Wasserstoff) aus dem Betriebsmittelspeicher.

Entsprechend einer bevorzugten Ausführungsform ist der Latentwärmespeicher wenigstens zeitweise zusätzlich mit den Brennstoffzellen zur Kaltstartaufheizung derselben wirkverbunden. Dies kann beispielsweise mittels Kopplung des Brennstoffzellenkühlkreislaufs mit dem Betriebsmittelkreislauf des Betriebsmittelspeichers erfolgen, so dass Latentwärme -gegebenenfalls zusätzlich und/oder gleichzeitig zur Betriebsmittelerwärmung- auch zum Aufheizen der Brennstoffzellen genutzt werden kann.

Weitere vorteilhafte Ausgestaltungen der Erfindung ergeben sich aus der Beschreibung.

Die Erfindung wird nachfolgend in mehreren Ausführungsbeispielen anhand einer zugehörigen Zeichnung näher erläutert. Dabei zeigt:
- Figur 1: eine schematische Darstellung eines erfindungsgemäßen Brennstoffzellensystems, das mit einer Abwärmefunktionseinheit eines Verbrennungs-motors wirkverbunden ist;
- Figur 2: eine schematische Darstellung eines erfindungsgemäßen Brennstoffzellensystems gemäß einer alternativen Ausführung, und
- Figur 3: eine schematische Darstellung eines erfindungsgemäßen Verbrennungs-motorsystems gemäß einer weiteren, alternativen Ausführungsform.

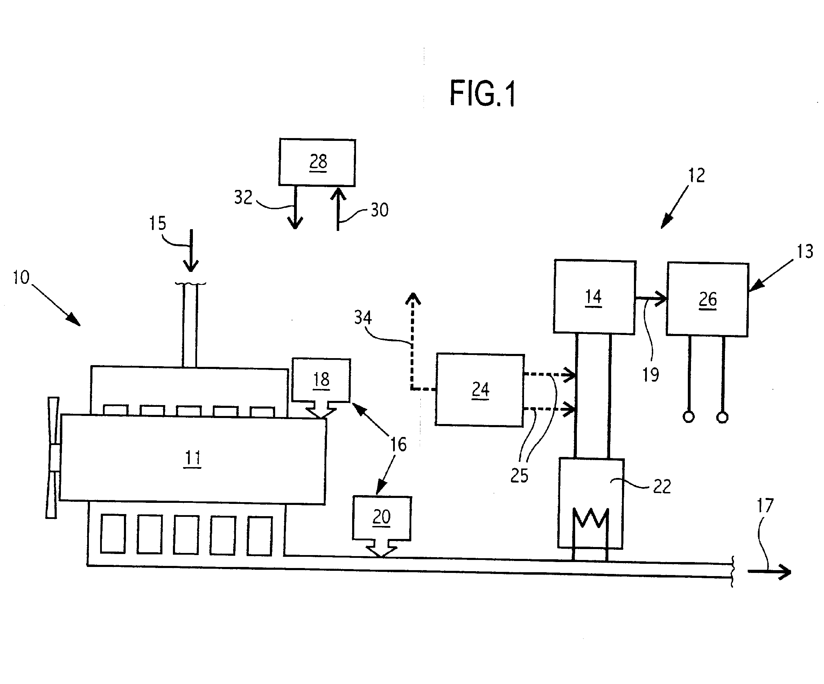

Die Figur 1 zeigt ein Verbrennungsmotorsystem 10 eines Kraftfahrzeugs (nicht dargestellt), das mit einem Brennstoffzellensystem 12 verbunden ist. Das Verbrennungsmotorsystem 10 enthält einen mit Kraftstoff (Pfeil 15) beaufschlagbaren Verbrennungsmotor 11, der als Antriebsaggregat des Kraftfahrzeugs dient. Das Brennstoffzellensystem 12 weist eine Brennstoffzelleneinheit 13 auf, welche die Funktion einer Hilfsenergie-Bereitstellungseinheit hat und zur im Vergleich zu einer mittels des Verbrennungsmotors 11 angetriebenen Lichtmaschine wirkungsgradgünstigeren Stromerzeugung im Kraftfahrzeug dient. Das Brennstoffzellensystem 12 weist einen Betriebsmittelspeicher 14 auf, der beispielsweise als Druckspeicher oder als Kryo-Speicher oder als Metallhydridspeicher ausgebildet sein kann. Der Betriebsmittelspeicher 14 ist gemäß Pfeil 19 mit einer Mehrzahl an Brennstoffzellen 26 der Brennstoffzelleneinheit 13 verbunden. Die Brennstoffzellen 26 sind vorzugsweise als Membran- oder Festoxidbrennstoffzellen ausgebildet und werden auf an sich bekannte Weise mit Wasserstoff als Betriebsmittel betrieben. Zur Gewährleistung einer hinreichenden Wasserstoffversorgung der Brennstoffzellen 26 mittels des Betriebsmittelspeichers 14 (H₂-Speicher) wird Abwärme eines verbrennungsmotorischen Antriebsstranges zum Betreiben des Betriebsmittelspeichers 14 genutzt.

Im Falle eines Metallhydridspeichers 14 wird selbiger unter Druck mit gasförmigen Wasserstoff betankt. Dabei muss der Metallhydridspeicher 14 erwärmt werden, um H₂-Moleküle aus der atomaren Metallgitterstruktur auszulösen. Die hierzu notwendige Wärme wird vorteilhafterweise aus dem konventionellen Antriebsstrang des Kraftfahrzeugs ausgekoppelt. Es erfolgt dabei eine Betriebsmittelerwärmung im Metallhydridspeicher 14 mittels mindestens einer verbrennungsmotorischen Abwärmefunktionseinheit 16, welche mit dem Metallhydridspeicher 14 zu diesem Zweck wenigstens zeitweise wirkverbindbar ist. Dabei kann die Abwärmefunktionseinheit 16 ein Kühlkreislaufsystem 18 der Kraftfahrzeug-Antriebseinheit (Verbrennungsmotor 11) und/oder ein Abgasführungssystem 20 des Verbrennungsmotors 11 sein. Im in der Figur 1 dargestellten Ausführungsbeispiel erfolgt eine Abwärmenutzung aus dem Abgasführungssystem 20 zur Betriebsmittelerwärmung im Metallhydridspeicher 14 unter Zwischenschaltung eines Wärmetauschers 22. Das Abgas kann anschließend gemäß Pfeil 17 einer weiteren, nicht in Figur 1 dargestellten Funktionseinheit des Kraftfahrzeugs zugeführt werden.

Der Metallhydridspeicher 14 ist zusätzlich mit einem Latentwärmespeicher 24 als Wärmequelle zur Betriebsmittelerwärmung wenigstens zeitweise wirkverbindbar. Mittels des Latentwärmespeichers 24 wird somit Latentwärme gemäß den Pfeilen 25 zur Betriebsmittelerwärmung genutzt. Der Latentwärmespeicher 24 dient insbesondere dazu, während einer Kaltstartphase des Verbrennungsmotors 11, bei welcher eine verbrennungsmotorische Abwärme nicht oder wenigstens nicht hinreichend zur Betriebsmittelerwärmung genutzt werden kann, die zum Betreiben der Brennstoffzelleneinheit 13 erforderliche Wärme schnell zur Verfügung zu stellen. Dabei kann die Latentwärme des Latentwärmespeichers 24 zum Betreiben des Metallhydridspeichers 24 (Pfeile 25) und/oder zum Aufwärmen der Brennstoffzellen 26 (Pfeil 34) wenigstens zeitweise zugeschaltet werden. Dies ermöglicht die Deckung von angeforderter elektrischer Energie im Kraftfahrzeug bereits beim Starten (auch beim Kaltstarten) des Kraftfahrzeugs. Die hierdurch erzielbare schnelle Einsetzbarkeit der Brennstoffzelleneinheit 13 erlaubt eine verhältnismäßig geringe Auslegung des Energieinhalts eines zusätzlichen Permanentspeichers (zum Beispiel einer Batterie) des Kraftfahrzeugs zur Überbrückung einer jeweiligen Startphase, insbesondere Kaltstartphase. Die sofortige Verfügbarkeit der Latentwärme zur Vorwärmung der Brennstoffzellen 26 verkürzt die Übergangszeit, nach welcher der einsetzende elektrochemische Brennstoffzellenprozess eine selbständige Aufheizung der Brennstoffzellen 26 (Brennstoffzellenstapel) ermöglicht.

Entsprechend dem Ausführungsbeispiel der Figur 1 ist ferner eine Regeleinheit 28 vorgesehen insbesondere zur Regelung der Wärmeeinbringung in den Betriebsmittelkreislauf des Betriebsmittelspeichers 14 (beispielsweise Metallhydridspeicher) in Abhängigkeit der jeweils geforderten elektrischen Brennstoffzellenlast. Darüber hinaus kann die Regeleinheit 28 mit weiteren Funktionseinheiten des Verbrennungsmotorsystems 10 und/oder des Brennstoffzellensystems 12 operativ verbunden sein (Pfeile 30,32).

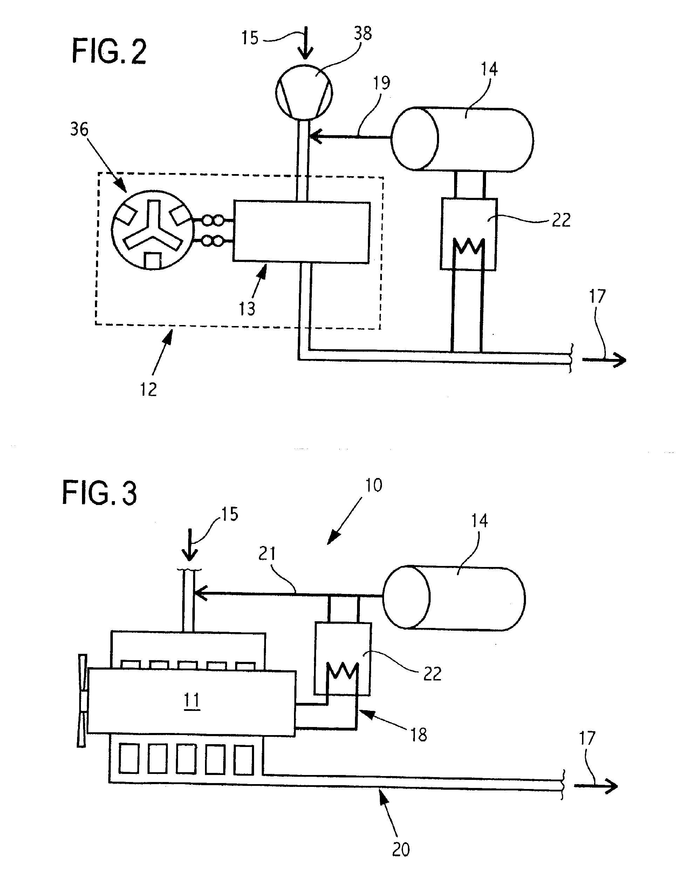

Die Figuren 2 und 3 zeigen alternative Ausführungsformen eines möglichen Einsatzgebietes eines Betriebsmittelspeichers in einem Kraftfahrzeug sowie einer möglichen Abwärmenutzung zur Erwärmung des Betriebsmittelspeichers beziehungsweise des Betriebsmittels auf eine erwünschte Betriebstemperatur.

Figur 2 zeigt einen Betriebsmittelspeicher 14 eines Brennstoffzellensystems 12, der als Wasserstoffspeicher ausgebildet ist und gemäß Pfeil 19 mit einer Brennstoffzelleneinheit 13 zu deren Wasserstoffbeaufschlagung in Verbindung steht. Die Brennstoffzelleneinheit 13 wird mittels eines Verdichters 38 mit mindestens einem weiteren Betriebsstoff gemäß Pfeil 15 beaufschlagt und dient zur Erzeugung von elektrischem Strom, der zum Betrieben eines Elektromotors 36 genutzt wird. Das gemäß Pfeil 17 abzuführende Brennstoffzellenabgas wird wenigstens zeitweise unter Zwischenschaltung eines Wärmetauschers 22 zur Erwärmung des Betriebsmittelspeichers 14 beziehungsweise des in die Brennstoffzelleneinheit 13 zuzuführenden Betriebsmittels (Wasserstoff) genutzt.

Figur 3 zeigt einen Betriebsmittelspeicher 14 eines Verbrennungsmotorsystems 10, der als Wasserstoffspeicher und/oder als Wasserkohlenstoffspeicher ausgebildet sein kann und mit einem Verbrennungsmotor 11 zur dessen Betriebsmittelbeaufschlagung gemäß Pfeil 21 in Verbindung steht. Der Verbrennungsmotor 11 wird zusätzlich mit einem Kraftstoff entsprechend Pfeil 15 beaufschlagt. Gemäß Figur 3 wird nicht -wie in Figur 1- ein Abgasführungssystem 20, sondern ein Kühlkreislaufsystem 18 unter Zwischenschaltung eines Wärmetauschers 22 zur Erwärmung des Betriebsmittels des Betriebsmittelspeichers 14 genutzt. Das Verbrennungsmotorabgas wird dabei gemäß Pfeil 17 einer weiteren, nicht in Figur 3 dargestellten Funktionseinheit des Kraftfahrzeugs zugeführt.

Erfindungsgemäß sind somit eine Vielzahl an Konzepten denkbar zur Betriebsmittelerwärmung und gegebenenfalls kombinierten Brennstoffzellenvorwärmung in einem Kraftfahrzeug. Es können unterschiedliche Typen von Antriebssträngen, Brennstoffzellen und/oder Kraftstoffen in unterschiedlichen Kombinationen zum Einsatz kommen zur Durchführung eines betriebsoptimierten Abwärmemanagements. Mittels thermischer Integration von ansonsten ungenutzter Abwärme im Kraftfahrzeug kann eine vorteilhafte Erhöhung des Gesamtsystemwirkungsgrads erzielt werden. Die Wirkungsgradzunahme resultiert dabei sowohl aus einer effektiveren Betriebsmittel-Speichersteuerung, als auch bei Einsatz eines Brennstoffzellensystems aus einer höheren Wasserstoff-Zuführtemperatur, die einen geringeren Energiebedarf zur Durchführung einer anschließenden Brennstoffzellenedukt-Vorwärmung nach sich zieht. Bei Einsatz eines konventionellen Verbrennungsmotor-Antriebsstrangs kann ferner auf einen insbesondere elektrischen Betriebsmittelverdampfer verzichtet werden.

## Patentansprüche

1. Kraftfahrzeug mit einer mindestens eine Abwärmefunktionseinheit aufweisenden Antriebseinrichtung und mit einem Betriebsmittelspeicher, **dadurch gekennzeichnet, dass** der Betriebsmittelspeicher (14) zur Betriebsmittelerwärmung mit der Abwärmefunktionseinheit (16) wenigstens zeitweise wirkverbunden ist.

2. Kraftfahrzeug nach Anspruch 1, **dadurch gekennzeichnet, dass** die Abwärmefunktionseinheit (16) ein Abgasführungssystem (20) ist.

3. Kraftfahrzeug nach einem der vorhergehenden Ansprüche, **dadurch gekennzeichnet, dass** die Abwärmefunktionseinheit (16) ein Kühlkreislaufsystem (18) ist.

4. Kraftfahrzeug nach einem der vorhergehenden Ansprüche, **dadurch gekennzeichnet, dass** die Abwärmefunktionseinheit (16) Teil eines Verbrennungsmotorsystems (10) und/oder Teil eines Brennstoffzellensystems (12) ist.

5. Kraftfahrzeug nach einem der vorhergehenden Ansprüche, **dadurch gekennzeichnet, dass** der Betriebsmittelspeicher (14) zur Betriebsmittelbeaufschlagung mit einem Verbrennungsmotor (11) und/oder mit einer Brennstoffzelleneinheit (13) verbunden ist.

6. Kraftfahrzeug nach einem der vorhergehenden Ansprüche, **dadurch gekennzeichnet, dass** das Betriebsmittel ein Kraftstoff, insbesondere Kohlenwasserstoff, oder Wasserstoff ist.

7. Kraftfahrzeug nach einem der vorhergehenden Ansprüche, **dadurch gekennzeichnet, dass** der Betriebsmittelspeicher (14) als Druckspeicher oder als Kryo-Speicher oder als Metallhydridspeicher ausgebildet ist.

8. Kraftfahrzeug nach einem der vorhergehenden Ansprüche, **dadurch gekennzeichnet, dass** der Betriebsmittelspeicher (14) unter Zwischenschaltung mindestens eines Wärmetauschers (22) mit der Abwärmefunktionseinheit (16) verbunden ist.

9. Kraftfahrzeug nach einem der vorhergehenden Ansprüche, **dadurch gekennzeichnet, dass** der Betriebsmittelspeicher (14) zusätzlich mit einem Latentwärmespeicher (24) als Wärmequelle wenigstens zeitweise wirkverbunden ist.

10. Kraftfahrzeug nach einem der vorhergehenden Ansprüche, **dadurch gekennzeichnet, dass** der Latentwärmespeicher (24) in einem Betriebsmittelkreislauf des Betriebsmittelspeichers (14) integriert ist.

11. Kraftfahrzeug nach einem der vorhergehenden Ansprüche, **dadurch gekennzeichnet, dass** Brennstoffzelleneinheit (13) als Hilfsenergie-Bereitstellungseinheit ausgebildet ist.

12. Kraftfahrzeug nach einem der vorhergehenden Ansprüche, **dadurch gekennzeichnet, dass** die Brennstoffzellen (26) als Membran- oder als Festoxidbrennstoffzellen ausgebildet sind.

13. Kraftfahrzeug nach einem der vorhergehenden Ansprüche, **dadurch gekennzeichnet, dass** eine Regeleinheit (28) vorgesehen ist zur Regelung der Wärmeeinbringung in einem Betriebsmittelkreislauf des Betriebsmittelspeichers (14) in Abhängigkeit der jeweils geforderten elektrischen Brennstoffzellenlast.

14. Kraftfahrzeug nach einem der vorhergehenden Ansprüche, **dadurch gekennzeichnet, dass** der Latentwärmespeicher (24) wenigstens zeitweise zusätzlich mit den Brennstoffzellen (26) zur Kaltstartaufheizung derselben wirkverbunden ist.
